# EUROPÄISCHE PATENTSCHRIFT

(11) **EP 2 539 851 B1**
(45) Veröffentlichungstag und Bekanntmachung des Hinweises auf die Patenterteilung: **11.04.2018**
(21) Anmeldenummer: 11704588.0
(22) Anmeldetag: 10.02.2011
(51) Int. Cl.: G06K 9/00

(54) **VERFAHREN UND VORRICHTUNG ZUR ANALYSE EINES BILDES EINER BILDERFASSUNGSEINRICHTUNG FÜR EIN FAHRZEUG**
METHOD AND APPARATUS FOR ANALYSING AN IMAGE FROM AN IMAGE CAPTURE DEVICE FOR A VEHICLE
PROCÉDÉ ET DISPOSITIF POUR ANALYSER UNE IMAGE PRISE PAR UN DISPOSITIF DE PRISE DE VUE DESTINÉ À UN VÉHICULE

(30) Priorität: 24.02.2010 DE 102010002312
(43) Veröffentlichungstag der Anmeldung: 02.01.2013
(73) Patentinhaber: Robert Bosch GmbH, 70442 Stuttgart (DE)
(72) Erfinder: EHLGEN, Tobias, 72076 Tübingen (DE); SEGER, Ulrich, 71229 Leonberg-Warmbronn (DE); RUHNAU, Paul, 71254 Ditzingen (DE)
(86) Internationale Anmeldenummer: PCT/EP2011/051934
(87) Internationale Veröffentlichungsnummer: WO 2011/104124

(56) Entgegenhaltungen:
- EP-A2- 1 548 685
- DE-A1- 10 303 046
- JP-A- 2001 028 746
- JP-A- 2007 245 970
- US-B1- 6 353 392

## Beschreibung

### Stand der Technik

Die vorliegende Erfindung bezieht sich auf ein Verfahren zur Analyse eines Bildes einer Bilderfassungseinrichtung, auf ein entsprechendes Steuergerät sowie auf ein entsprechendes Computerprogrammprodukt.

Die US-7423752 B2 befasst sich mit Nebelerkennungsalgorithmen, die versuchen die Sichtweite einer Kamera bei Nebel zu bestimmen. Dabei wird bei einer Objekterkennung auf eine Erkennung von Kanten aufgebaut. Die Patentschriften JP2001-028746 und DE 103 03 046 offenbaren auch jeweils eine kamerabasierte Erkennung von eingeschränkten Sichtverhältnissen vor dem Fahrzeug anhand der Auswertung von Bildhelligkeiten und -kanten.

### Offenbarung der Erfindung

Vor diesem Hintergrund wird mit der vorliegenden Erfindung ein Verfahren zur Analyse eines Bildes einer Bilderfassungseinrichtung, weiterhin eine Vorrichtung, die dieses Verfahren verwendet sowie schließlich ein entsprechendes Computerprogrammprodukt gemäß den unabhängigen Patentansprüchen vorgestellt. Vorteilhafte Ausgestaltungen ergeben sich aus den jeweiligen Unteransprüchen und der nachfolgenden Beschreibung.

Kern der vorliegenden Erfindung ist ein Blindheitserkennungsalgorithmus, bei dem eine Blindheitserkennung abhängig von einer Kameraregelung erfolgen kann. Mit Hilfe der Kameraregelung kann eine Aussage über die Wahrscheinlichkeit von Struktur im Bild bestimmt werden und die Sensitivität der Blindheitserkennung entsprechend angepasst werden. Um eine Aussage über die Blindheit der Kamera zu treffen, kann somit die Kennlinie der Kameraregelung mitbetrachtet werden. Indem eine Kennlinie der Kamera verwendet wird und nicht nur die Helligkeit, kann die Sensitivität genauer angepasst werden. Durch die Kenntnis der Kennlinie und damit des relinearisierten Histogramms kann die Sensitivität der Blindheitserkennung wesentlich besser an die aktuelle Situation angepasst werden. Genauso kann das erzeugte Histogramm nicht nur für die Bewertung der Sensitivität benutzt werden, sondern auch direkt als weitere Informationsquelle, neben der Struktur im Bild, genutzt werden, um eine Aussage über Blindheit zu treffen.

Ein weiterer Vorteil dieser Ausführungsform ist, die Kenntnis über dieses relinearisierte Histogramm in bestimmten Bereichen des Bildes und nicht nur über das ganze Bild. Damit kann die Blindheit besonders in Szenen mit starken Helligkeitsunterschieden in Teilen des Bildes verbessert werden.

Indem die Informationen der Kameraregelung genutzt werden, kann die Blindheitserkennung wesentlich besser an die tatsächlichen Begebenheiten angepasst werden. Damit wird eine stabilere Aussage über Blindheit ermöglicht.

Der Blindheitserkennungsalgorithmus kann auf Strukturen, beispielsweise Kanten eines Objektes aufbauen. Erfindungsgemäß kann eine Unterteilung eines Kamerabildes vorgenommen werden. Vorteilhafterweise können spezielle Blindheitssignale für unterschiedliche Funktionen, zum Beispiel für einen Betrieb einer Windschutzscheibenheizung bei Kondensationsbildung, generiert werden. Zur Verbesserung der Blindheitserkennung können Ergebnisse von anderen Messalgorithmen in die Bewertung der Blindheit mit einfließen.

Es kann eine Blindheitswahrscheinlichkeit für verschiedene Regionen in einem Bild berechnet werden und daraus können Blindheitssignale für verschiedene Algorithmen generiert werden. Die Algorithmen können wiederum in einen sicheren Zustand gehen, wenn Blindheit erkannt wurde. Die Blindheitswahrscheinlichkeit kann zusätzlich mit einer Freisichtwahrscheinlichkeit verrechnet werden.

Zur Stützung der Blindheitskennung können somit Freisichtinformationen verwendet werden. Zusätzlich kann eine Sensitivität der Blindheitserkennung beleuchtungsabhängig sein. Zum Beispiel besteht bei Nacht eine geringere Wahrscheinlichkeit, dass es sich um Blindheit handelt, wenn wenige Kanten im Kamerabild gefunden werden. Wird das Kamerabild in Blindheitsregionen unterteilt, so können aus diesen wiederum Blindheitssignale berechnet werden. Zum Beispiel sind die Regionen im oberen Bereich des Bildes für die Blindheitserkennung der Funktion Spurerkennung nicht interessant. Erfindungsgemäß kann eine Entprellung der Blindheitssignale abhängig von der Dauer sein, in der Blindheit erkannt wird.

Die vorliegende Erfindung schafft ein Verfahren zur Analyse eines Bildes einer Bilderfassungseinrichtung für ein Fahrzeug, das die folgenden Schritte umfasst: Empfangen eines Bildes über eine Bildschnittstelle, wobei das Bild ein von der Bilderfassungseinrichtung bereitgestelltes Bild repräsentiert; Bestimmen einer Helligkeitsinformation des Bildes basierend auf dem Bild, unter Berücksichtigung einer Belichtungskennlinie der Bilderfassungseinrichtung; Einstellen eines Schwellwertes, abhängig von der Helligkeitsinformation; Bestimmen einer Bildstruktur des Bildes; und Bestimmen eines Blindheitswertes für das Bild basierend auf der Bildstruktur unter Einsatz des Schwellwertes.

Bei der Bilderfassungseinrichtung kann es sich um eine Kamera handeln, die im oder an einem Fahrzeug angeordnet ist. Die Bilderfassungseinrichtung kann ausgebildet sein, um fortlaufend Bildinformationen oder Bilder einer Fahrzeugumgebung zu erfassen und bereitzustellen. Die Bilder können von unterschiedlichen Funktionen oder Konsumenten im Fahrzeug, beispielsweise einer Scheibenheizung oder einem Fahrspurassistenten genutzt werden. Ist die Bilderfassungseinrichtung blind, so enthalten die an diese Funktionen bereitgestellten Bilder keine verwendbare Bildinformation. Wird die Blindheit nicht erkannt, so kann dies zu einer Fehlfunktion der Funktionen führen. Die Blindheit kann zum Beispiel durch eine starke Verschmutzung der Optik der Bilderfassungseinrichtung oder durch einen Defekt derselben hervorgerufen werden. Die Blindheit kann den gesamten Bildbereich oder nur einen oder mehrere Bildbausschnitte des von der Bilderfassungseinrichtung bereitgestellten Bildes betreffen. Der Blindheitswert oder ein daraus ermittelter Wert für eine Blindheitswahrscheinlichkeit definieren, mit welcher Wahrscheinlichkeit eine Blindheit der Kamera vorliegt. Basierend auf dem Blindheitswert oder der Blindheitswahrscheinlichkeit kann somit bestimmt werden, ob eine das Bild betreffende Bildinformation aufgrund einer Blindheit fehlerhaft ist und daher in den entsprechenden Funktionen nicht oder nur bedingt ausgewertet werden sollte. Bei den Bildstrukturen kann es sich um Kantenverläufe entlang einer Helligkeitsgrenze oder Luminizenzgrenze innerhalb des Bildes handeln. Somit kann eine Kante einen Helligkeitsunterschied oder einen Luminizenzunterschied definieren. Charakteristika der Kantenverläufe, wie beispielsweise deren Richtungen oder Längen können ausgewertet werden, um die Blindheitswerte zu bestimmen. Zum Bestimmen des Blindheitswertes kann ein spezielles Charakteristika, beispielsweise eine Kantensteigung, mit dem Schwellwert, der einem Blindheitsschwellwert entsprechen kann, verglichen werden. Über den Schwellwert kann eine Sensitivität der Blindheitserkennung eingestellt werden. Indem der Schwellwert abhängig von der Helligkeitsinformation eingestellt wird, ist die Blindheitserkennung abhängig von der Kameraregelung. Auch können die Bildstrukturen ein oder eine Mehrzahl von Objekte kennzeichnen, die beispielsweise von einer Objekterkennung erkannt werden können. In diesem Fall kann zum Bestimmen des Blindheitswertes eine Anzahl erkannter Objekte mit dem Schwellwert, der in diesem Fall einem Freisichtschwellwert entsprechen kann, verglichen werden. Somit kann die Blindheitserkennung sowohl alleinig über eine Blindheitserkennung, alleinig über eine Freisichtprüfung oder über eine Kombination aus Blindheitserkennung und Freisichtprüfung durchgeführt werden. Im Fall der Kombination können die Blindheitserkennung und die Freisichtprüfung in voneinander getrennten Einrichtungen ausgeführt werden.

Das erfindungsgemäße Verfahren kann einen Schritt des Bestimmens eines relinearisierten Histogramms aus der Helligkeitsinformation umfassen. Das Einstellen des Schwellwertes kann abhängig von dem relinearisierten Histogramm durchgeführt werden. Neben dem Einstellen des Schwellwertes kann das Histogramm auch neben der Bildstruktur auch direkt als weitere Informationsquelle genutzt werden, um eine Aussage über die Blindheit zu treffen.

Das erfindungsgemäße Verfahren kann ferner einen Schritt des Ermittelns einer Helligkeitsänderung basierend auf einem zeitlichen Verlauf der Helligkeitsinformation umfassen. Das Bestimmen der Blindheitswahrscheinlichkeit kann für jede der Regionen ferner basierend auf der Helligkeitsänderung durchgeführt werden. Die Helligkeitsänderung stellt eine zusätzliche Möglichkeit zur Erkennung oder Absicherung der Blindheit dar. Dabei kann das Histogramm ausgewertet werden. Sofern darin wenig Bewegung besteht, kann dies als ein Hinweis auf Blindheit gewertet werden.

Gemäß einer Ausführungsform können die Bildstrukturen jeweils eine Kantensteigung pro Region darstellen. Die Kantensteigung kann mittels bekannter Verfahren ermittelt werden und gibt ein gutes Maß für die Strukturiertheit eines Bildbereichs.

Gemäß einer Ausführungsform können die Bildstrukturen zumindest ein Objekt darstellen, das in dem Bild abgebildet wird. Beispielsweise können die Bildstrukturen Umrisse oder Flächenverläufe des Objektes charakterisieren, die zur Bilderkennung ausgewertet werden können.

Das erfindungsgemäße Verfahren kann auch einen Schritt des Empfangens einer Information über Objekte umfassen, die basierend auf von der Bilderfassungseinrichtung bereitgestellten Bildern erkannt wurden. In einem Schritt des Bestimmens einer Objektanzahl kann diese für das Bild basierend auf der Information über die Objekte bestimmt werden, wobei die Objektanzahl eine Anzahl von erkannten Objekten pro Bild umfasst. In einem Schritt des Bestimmens kann ein Freisichtwert für das Bild basierend auf der Objektanzahl unter Einsatz eines Freisichtschwellwertes bestimmt werden. Das Bestimmen einer Blindheitswahrscheinlichkeit für das Bild kann basierend auf dem Blindheitswert und dem Freisichtwert durchgeführt werden. Durch die Auswertung der Zahl der Objekte in dem Bild kann eine zusätzliche Absicherung der Blindheit geschaffen werden. Werden keine Objekte gezählt, so kann dies ein Hinweis auf eine Blindheit der Kamera sein. Bei den Objekten, die zum Bestimmen des Freisichtwertes berücksichtigt werden, kann es sich beispielsweise um erkannte Fahrspuren oder Fremdfahrzeuge handeln. Der Freisichtwert oder ein daraus ermittelter Wert für eine Blindheitswahrscheinlichkeit definieren, mit welcher Wahrscheinlichkeit eine Freisicht oder Blindheit der Kamera vorliegt. Die Objekterkennung kann von separaten Objekterkennungseinrichtungen durchgeführt werden. Die Objekterkennung kann basierend auf dem aktuellen Bild der Kamera oder basierend auf zeitlich vorangegangenen Bildern erfolgen. Es kann die Anzahl der Objekte gezählt werden, die innerhalb eines vorbestimmten Zeitintervalls erkannt werden. Auf diese Weise kann der Wert der Objektanzahl fortlaufend aktualisiert werden.

Gemäß einer Ausführungsform kann ein Einstellens des Freisichtschwellwertes, abhängig von der Helligkeitsinformation, erfolgen. Auf diese Weise kann eine über die Kameraregelung eingestellte Empfindlichkeit der Bilderfassung bei der Freisichtprüfung berücksichtigt werden.

Ein bestehender Freisichtwert für das Bild kann abhängig von einem Vergleich der Objektanzahl des Bildes mit dem Freisichtschwellwert um einen vorbestimmten Wert verändert werden. Beispielsweise kann der bestehende Freisichtwert verringert werden, wenn keine Objekte oder weniger Objekte gezählt werden, als es durch den Freisichtschwellwert angegeben ist.

Gemäß einer Ausführungsform kann das erfindungsgemäße Verfahren einen Schritt des Unterteilens des Bildes in einzelne Regionen umfassen, wobei ein Blindheitswert und/oder ein Freisichtwert für jede der Regionen bestimmt werden können. Um für jeder Region einen Blindheitswert zu bestimmen, kann nach dem Unterteilen des Bildes ein Bestimmen von Bildstrukturen des Bildes für jede der Regionen und ein Bestimmen eines Blindheitswertes für jede der Regionen basierend auf den Bildstrukturen der jeweiligen Regionen unter Einsatz des Blindheitsschwellwertes durchgeführt werden. Somit kann das Gesamtbild in Regionen aufgeteilt werden, wobei jede Region einen bestimmten Bereich des Gesamtbildes umfasst. Alle Regionen zusammen können das Gesamtbild ergeben. Die einzelnen Regionen des Bildes können sich nicht überlappen. Somit ist keine doppelte Auswertung von Bilddaten erforderlich. Alternativ ist eine Überlappung von Bildbereichen einzelner Regionen möglich. Für jede Region wird ein Blindheitswert bestimmt. Ferner kann für jede Region, basierend auf dem jeweiligen Blindheitswert, eine Blindheitswahrscheinlichkeit für diese Region bestimmt werden. Der Blindheitswert oder der daraus ermittelte Wert für die Blindheitswahrscheinlichkeit definieren, mit welcher Wahrscheinlichkeit eine Blindheit der Kamera in dem von der jeweiligen Region abgedeckten Bereich vorliegt. Basierend auf der Blindheitswahrscheinlichkeit kann somit bestimmt werden, ob eine die Region betreffende Bildinformation aufgrund einer Blindheit fehlerhaft ist und daher in den entsprechenden Funktionen nicht oder nur bedingt ausgewertet werden sollte. In entsprechender Weise kann für jede der Regionen ein Freisichtwert bestimmt werden. Dabei kann ein Objekt, das sich über mehrere Regionen erstreckt, für jede der Regionen gezählt werden. Werden in einer Region viele Objekte gezählt, so deutet dies darauf hin, dass die Kamera zumindest bezüglich dieser Region nicht blind ist.

Das erfindungsgemäße Verfahren kann ferner einen Schritt des Bestimmens einer ersten Blindheitsinformation basierend auf Blindheitswerten einer ersten Gruppe von Regionen und einer zweiten Blindheitsinformation basierend auf Blindheitswerten einer zweiten Gruppe von Regionen umfassen. Die Blindheitsinformationen können als Blindheitssignale bereitgestellt werden. Die Blindheitsinformationen können jeweils anzeigen, ob bezüglich der jeweiligen Gruppe von Regionen eine Blindheit der Bilderfassungseinrichtung angenommen wird oder nicht. Dabei kann die erste Blindheitsinformation an eine Funktion bereitgestellt werden, die auf einer Bildinformation aus der ersten Gruppe von Regionen des Bildes aufbaut. Entsprechend dazu kann die zweite Blindheitsinformation an eine Funktion bereitgestellt werden, die auf einer Bildinformation aus der zweiten Gruppe von Regionen des Bildes aufbaut. Einzelne Regionen können in mehreren Gruppen beinhaltet sein.

Das erfindungsgemäße Verfahren kann einen Schritt des Bereitstellens der ersten Blindheitsinformation an eine erste Bildauswerteeinrichtung und der zweiten Blindheitsinformation an eine zweite Bildauswerteeinrichtung umfassen. Die erste Bildauswerteeinrichtung kann ausgebildet sein, um eine in der ersten Gruppe von Regionen enthaltene Bildinformation des Bildes auszuwerten und die zweite Bildauswerteeinrichtung kann ausgebildet sein, um eine in der zweiten Gruppe von Regionen enthaltene Bildinformation des Bildes auszuwerten. Die Blindheitsinformationen können jeweils als Signale bereitgestellt werden. Die Bildauswerteeinrichtungen können Funktionen oder Konsumenten darstellen.

Die vorliegende Erfindung schafft ferner eine Vorrichtung zur Analyse eines Bildes einer Bilderfassungseinrichtung, die ausgebildet ist, um die Schritte des erfindungsgemäßen Verfahrens durchzuführen bzw. umzusetzen. Auch durch diese Ausführungsvariante der Erfindung in Form einer Vorrichtung kann die der Erfindung zugrunde liegende Aufgabe schnell und effizient gelöst werden.

Unter einer Vorrichtung kann vorliegend ein elektrisches Gerät verstanden werden, das Sensorsignale verarbeitet und in Abhängigkeit davon Steuersignale ausgibt. Die Vorrichtung kann eine Schnittstelle aufweisen, die hard- und/oder softwaremäßig ausgebildet sein kann. Bei einer hardwaremäßigen Ausbildung können die Schnittstellen beispielsweise Teil eines sogenannten System-ASICs sein, der verschiedenste Funktionen der Vorrichtung beinhaltet. Es ist jedoch auch möglich, dass die Schnittstellen eigene, integrierte Schaltkreise sind oder zumindest teilweise aus diskreten Bauelementen bestehen. Bei einer softwaremäßigen Ausbildung können die Schnittstellen Softwaremodule sein, die beispielsweise auf einem Mikrocontroller neben anderen Softwaremodulen vorhanden sind.

Von Vorteil ist auch ein Computerprogrammprodukt mit Programmcode, der auf einem maschinenlesbaren Träger wie einem Halbleiterspeicher, einem Festplattenspeicher oder einem optischen Speicher gespeichert ist und zur Durchführung des Verfahrens nach einer der vorstehend beschriebenen Ausführungsformen verwendet wird, wenn das Programm auf einer Vorrichtung ausgeführt wird.

Die Erfindung wird nachstehend anhand der beigefügten Zeichnungen beispielhaft näher erläutert. Es zeigen:
- Fig. 1: ein Ablaufdiagramm eines Ausführungsbeispiels der vorliegenden Erfindung;
- Fig. 2: ein Ablaufdiagramm eines weiteren Ausführungsbeispiels der vorliegenden Erfindung;
- Fig. 3: ein Ablaufdiagramm eines Teilabschnitts eines erfindungsgemäßen Verfahrens, gemäß einem Ausführungsbeispiel der vorliegenden Erfindung;
- Fig. 4: ein Ablaufdiagramm eines weiteren Teilabschnitts eines erfindungsgemäßen Verfahrens, gemäß einem Ausführungsbeispiel der vorliegenden Erfindung;
- Fig. 5: eine Darstellung eines Kamerabildes, gemäß einem Ausführungsbeispiel der vorliegenden Erfindung; und
- Fig. 6: eine Helligkeitskennlinie, gemäß einem Ausführungsbeispiel der vorliegenden Erfindung.

In der nachfolgenden Beschreibung bevorzugter Ausführungsbeispiele der vorliegenden Erfindung werden für die in den verschiedenen Figuren dargestellten und ähnlich wirkenden Elemente gleiche oder ähnliche Bezugszeichen verwendet, wobei auf eine wiederholte Beschreibung dieser Elemente verzichtet wird.

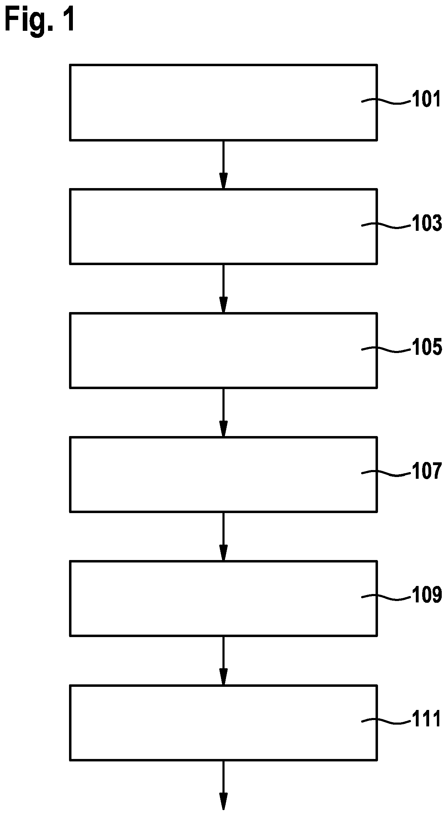

Fig. 1 zeigt ein Ablaufdiagramm eines Verfahrens zur Analyse eines Bildes einer Bilderfassungseinrichtung, gemäß einem Ausführungsbeispiel der vorliegenden Erfindung. In einem Schritt 101 wird ein Bild empfangen. Das Bild kann als Rohbild direkt von der Bilderfassungseinrichtung, beispielsweise einer Kamera, empfangen werden oder als vorverarbeitetes Bild von einer Vorverarbeitungseinrichtung. Das Bild kann Bildinformationen, beispielsweise in Form von Bildpunkten aufweisen, die einen Sichtbereich der Bilderfassungseinrichtung wiedergeben.

In einem Schritt 103 kann eine Helligkeitsinformation des Bildes bestimmt werden. Dies kann unter Berücksichtigung einer Belichtungskennlinie der Bilderfassungseinrichtung erfolgen. Eine Information über die Belichtungskennlinie kann von der Bilderfassungseinrichtung bereitgestellt oder aus einer Speichereinrichtung ausgelesen werden. In einem Schritt 105 kann ein Einstellen eines Blindheitsschwellwertes abhängig von der Helligkeitsinformation durchgeführt werden. Ferner kann in einem Schritt 107 eine Bildstruktur des Bildes bestimmt werden und in einem Schritt 109 kann ein Blindheitswert für das Bild bestimmt werden. Der Blindheitswert kann dabei basierend auf der Bildstruktur unter Einsatz des Blindheitsschwellwertes bestimmt werden. Aus dem Blindheitswert kann in einem Schritt 111 eine Blindheitswahrscheinlichkeit für das Bild bestimmt werden.

Gemäß einem weiteren Ausführungsbeispiel, können nicht nur ein Gesamtblindheitswert oder eine Gesamtblindheitswahrscheinlichkeit für das gesamte Bild sondern einzelne Blindheitswerte oder einzelne Blindheitswahrscheinlichkeiten für einzelne Regionen des Bildes bestimmt werden.

Dazu kann das Bild in eine Mehrzahl von Regionen unterteilt werden. Beispielsweise können drei Reihen und drei Spalten gebildet werden, so dass das Bild in neun Regionen unterteilt wird. Alternativ kann das Bild auf eine andere Weise unterteilt werden und es können mehr oder weniger als neun Regionen gebildet werden. Die Regionen können jeweils unterschiedliche Bildbereiche abdecken. Alternativ kann eine teilweise Überlappung der Regionen bestehen. Die Bildbereiche können so gewählt werden, dass die von den Algorithmen verwendeten Regionen abgedeckt sind.

Für jede Region können Bildstrukturen bestimmt werden, die sich innerhalb der entsprechenden Region befinden. Die Bildstrukturen können Kantenverläufe darstellen. Die Bestimmung der Bildstrukturen kann basierend auf bekannten Verfahren, beispielsweise zur Bestimmung von Kanten in einem Bild erfolgen. Die Bildstrukturen einer jeden Region werden verwendet, um für jede der Regionen einen Blindheitswert zu bestimmen. Es wird also für jede Region ein eigener Blindheitswert, basierend auf den Bildstrukturen des jeweiligen Bildes bestimmt. Dazu können die Bildstrukturen oder eine davon abgeleitete Größe mit einem Blindheitsschwellwert verglichen werden. Als Struktur kann erfindungsgemäß die mittlere Kantensteigung verwendet werden. Abhängig von einem Vergleichsergebnis kann der Blindheitswert auf einen entsprechenden Wert gesetzt werden. Beispielsweise kann der Blindheitswert einen ersten Wert aufweisen, wenn der Blindheitsschwellwert überschritten wird und einen zweiten Wert aufweisen, wenn der Blindheitsschwellwert unterschritten wird. Der erste Wert kann einen Hinweis auf eine für die entsprechende Region bestehende Blindheit geben und der zweite Wert kann einen Hinweis auf eine für die entsprechende Region bestehende Nicht-Blindheit geben, oder umgekehrt.

Der Blindheitsschwellwert kann fest vorgegeben sein, oder aber einstellbar sein. Wenn der Blindheitsschwellwert einstellbar ist, kann über den Blindheitsschwellwert eine Sensitivität der Blindheitserkennung eingestellt werden. Beispielsweise kann der Blindheitsschwellwert abhängig von einer Helligkeit des Bildes oder einer Helligkeit der Region des Bildes eingestellt werden. Wird der Blindheitsschwellwert abhängig von einer Helligkeit einer Region des Bildes eingestellt, so kann es sich bei der Region um eine vorbestimmte Region oder um die Region handeln, für die im Folgenden, basierend auf dem Blindheitsschwellwert, der Blindheitswert bestimmt wird. Abhängig von der Helligkeit kann ein der Helligkeit zugeordneter Blindheitsschwellwert ausgewählt werden.

Die Helligkeit des Bildes hängt von einer Regelung der Bilderfassungseinrichtung ab. Die Regelung kann beispielsweise eine Belichtungskennlinie darstellen. Die Helligkeit des Bildes ist von der Belichtungskennlinie abhängig. So kann das Bild eine große Helligkeit aufweisen, obwohl die erfasste Umgebung dunkel ist. Unter Kenntnis der Belichtungskennlinie oder einer bei der Erfassung des Bildes eingesetzten Regelung, kann aus der Helligkeit des Bildes auf die tatsächliche Helligkeit, beispielsweise der von dem Bild abgebildeten Umgebung, geschlossen werden. Somit kann abhängig von der tatsächlichen Helligkeit ein der tatsächlichen Helligkeit zugeordneter Blindheitsschwellwert ausgewählt werden. Dazu ist keine weitere Sensorik zur Ermittlung der Helligkeit in der Umgebung erforderlich. Stattdessen kann die tatsächliche Helligkeit basierend auf der Helligkeit des Bildes oder einer Region des Bildes und der Kameraregelung bestimmt werden. Eine Information über die Kameraregelung kann an das erfindungsgemäße Verfahren über eine Schnittstelle bereitgestellt werden.

Für jede Region kann eine Blindheitswahrscheinlichkeit bestimmt werden. Die Blindheitswahrscheinlichkeit einer Region wird basierend auf dem der Region zugeordneten Blindheitswert bestimmt. Die Blindheitswahrscheinlichkeit einer Region gibt an, mit welcher Wahrscheinlichkeit die Bilderfassungseinrichtung in einem von der Region abgedeckten Bereich blind ist.

Blindheitswahrscheinlichkeiten einzelner Region können miteinander verknüpft werden. So können unterschiedliche Blindheitsinformationen gebildet werden, die sich jeweils auf unterschiedliche Gruppierungen von Regionen beziehen können. Beispielsweise kann für eine erste Gruppe von Regionen eine erste Blindheitsinformation und für eine zweite Gruppe von Regionen eine zweite Blindheitsinformation bestimmt werden. Die jeweilige Blindheitsinformation basiert darauf auf den Blindheitswahrscheinlichkeiten der Regionen der jeweiligen Gruppen. Weitere Blindheitsinformationen für weitere Gruppen können gebildet werden. Es kann auch eine Blindheitsinformation gebildet werden, die lediglich einer einzelnen Region zugeordnet ist. Die Blindheitsinformation oder ein darauf basierendes Signal kann an eine Funktion bereitgestellt werden, die einen Bereich des Bildes auswertet oder weiterverarbeitet, der von der jeweiligen Gruppe von Regionen abgedeckt wird. Beispielsweise kann das auf einer Blindheitsinformation basierende Signal eine Warnung vor einer erkannten Blindheit umfassen, wenn eine durchschnittliche Blindheitswahrscheinlichkeit, die aus den Blindheitswahrscheinlichkeiten der Gruppe von Regionen gebildet wird, einen Grenzwert überschreitet oder unterschreitet. Alternativ kann das auf der Blindheitsinformation basierende Signal eine Warnung vor der erkannten Blindheit umfassen, wenn die Blindheitswahrscheinlichkeit eines oder mehrerer Regionen einen Grenzwert unterschreitet oder überschreitet.

Um die Blindheitswahrscheinlichkeiten genauer bestimmen zu können, kann zusätzlich für jede Region ein eigener Freisichtwert bestimmt werden. Eine Größe des Freisichtswerts hängt jeweils davon ab, ob in der entsprechenden Region Objekte erkannt werden und sofern Objekte erkannt werden, wie viele Objekte erkannt werden. Die Erkennung der Objekte kann Teil des erfindungsgemäßen Verfahrens sein oder getrennt davon durchgeführt werden. Findet die Objekterkennung separat statt, so kann dem erfindungsgemäßen Verfahren eine entsprechende Objektinformation bereitgestellt werden, aus der die Anzahl der Objekte pro Region ermittelt werden kann. Die Blindheitswerte und die Freisichtwerte können parallel bestimmt werden. Somit können für jede Region ein zugeordneter Freisichtwert und ein zugeordneter Blindheitswert bestimmt werden und basierend darauf kann eine zugeordnete Blindheitswahrscheinlichkeit bestimmt werden. In diesem Fall wird die Blindheitswahrscheinlichkeit für eine Region bestimmt, indem der entsprechende Blindheitswert und der entsprechende Freisichtwert miteinander kombiniert oder logisch verknüpft werden.

Die Blindheitswahrscheinlichkeiten können jeweils für alle Regionen oder nur für bestimmte Regionen bestimmt werden. Das erfindungsgemäße Verfahren kann fortlaufend wiederholt oder ansprechend auf eine Anfrage ausgeführt werden.

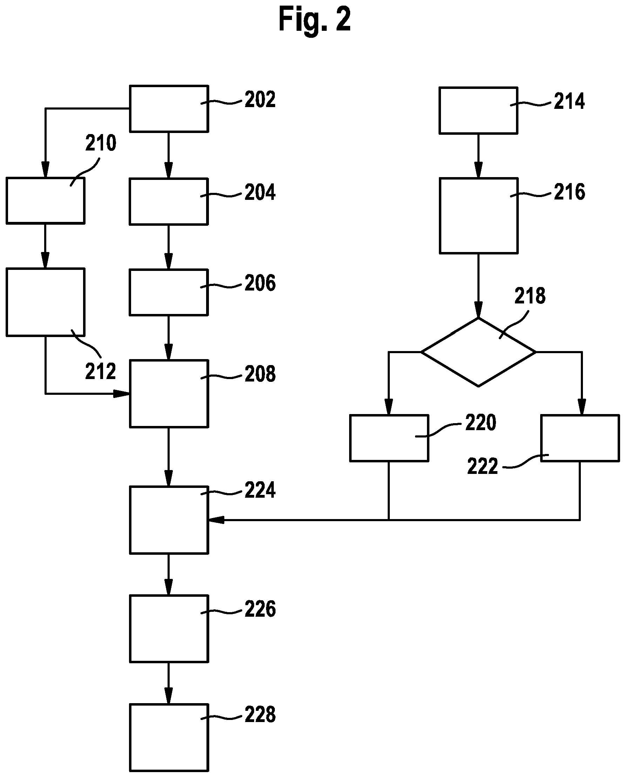

Fig. 2 zeigt ein Ablaufdiagramm eines Verfahrens zur Analyse eines Bildes einer Bilderfassungseinrichtung, gemäß einem weiteren Ausführungsbeispiel der vorliegenden Erfindung.

Gezeigt ist ein Sensorbild 202, das beispielsweise von einer Bilderfassungseinrichtung bereitgestellt werden kann. In einem Schritt 204 wird eine Aufteilung des Bildes 202 in neun Regionen durchgeführt. Die neun Regionen bilden eine 3x3 Matrix. Es folgt eine Bestimmung 206 der mittleren Kantensteigung pro Region. In einem Schritt 208 wird abhängig von einem Schwellwert die Blindheit pro Region bestimmt.

Die Wahrscheinlichkeit für Blindheit wird als Prozent ausgedrückt und ist abhängig von der Differenz der aktuellen mittleren Kantensteigung zu dem Schwellwert. 100% heißt in diesem Fall, dass es kaum Kanten gibt und damit Blindheit vorliegt. 0% bedeutet, dass die mittlere Kantensteigung oberhalb des Schwellwertes liegt.

Parallel zu den Schritten 202, 204 kann in einem Schritt 210 die Helligkeit in dem Bild 202 oder in einer Region bestimmt werden. In einem Schritt 210 kann ein Schwellwert bestimmt werden. Dazu kann eine Kennlinie die Abhängigkeit zwischen dem Schwellwert und der Helligkeit darstellen. Der Schwellwert kann zum Bestimmen der Blindheit im Schritt 208 eingesetzt werden. Zusätzlich oder alternativ kann im Schritt 210 eine Regelung der Bilderfassungseinrichtung, beispielsweise eine Belichtungskennlinie berücksichtigt werden, um den Schwellwert zu bestimmen.

Wiederum parallel zu den Schritten 202, 204, 208 können in einem Schritt 214 Ergebnisse von Messalgorithmen empfangen werden. Die Messalgorithmen können ausgebildet sein, um basierend auf dem Sensorbild 202 oder auf dem Sensorbild 202 zeitlich vorangegangenen Bildern beispielsweise Spuren, Objekte oder Verkehrszeichen, zusammenfassend als Objekte bezeichnet, zu erkennen. In einem Schritt 216 kann ein Zählen der Anzahl der Objekte durchgeführt werden, die in einem Zeitintervall in einer der neun Regionen detektiert werden. Anschließend kann ein Schwellwertvergleich 218 durchgeführt werden. Sind mehr erkannte Objekte in der Region, als ein Schwellwert vorgibt, so kann in einem Schritt 220 eine Freisichtwahrscheinlichkeit für diese Region auf 100% gesetzt werden. Sind dagegen nicht mehr erkannte Objekte in der Region, als der Schwellwert vorgibt, so kann in einem Schritt 222 die Freisichtwahrscheinlichkeit für diese Region verringert werden. Beispielsweise kann eine aktuelle Freisichtwahrscheinlichkeit für diese Region aus einer bestehenden Freisichtwahrscheinlichkeit für diese Region gebildet werden, in dem von der bestehenden Freisichtwahrscheinlichkeit der Wert 1 abgezogen wird. In diesem Fall gilt: Freisichtwahrscheinlichkeit = Freisichtwahrscheinlichkeit -1.

Die Schritte 202, 204, 206, 208, 210, 212 dienen der Blindheitserkennung. Die Schritte 214, 216, 218, 220, 222 dienen der Freisichterkennung.

In einem Schritt 224 werden die im Schritt 208 bestimmten Blindheitswerte und die aus in den Schritten 220, 222 bestimmten Freisichtwerte zusammengeführt und es wird eine Blindheitswahrscheinlichkeit bestimmt. Beispielsweise kann dazu eine Subtraktion durchgeführt werden. Dabei kann für jede Region eine eigene Blindheitswahrscheinlichkeit bestimmt werden. Gemäß diesem Ausführungsbeispiel gilt: Blindheitswahrscheinlichkeit = Blindheit - Freisicht. Die Blindheitswahrscheinlichtkeit kann dabei nie negativ werden. Ein Wert der Freisicht kann der Freisichtwahrscheinlichkeit entsprechen. In einem Schritt 226 wird ein Blindheitssignal für jede Funktion bestimmt, die von dem erfindungsgemäßen Verfahren mit Blindheitsinformationen versorgt wird. Ein Blindheitssignal, das für eine bestimmte Funktion bestimmt wird, kann aus Blindheitswahrscheinlichkeiten unterschiedlicher Regionen bestimmt werden. Ein Senden des oder der Blindheitssignale wird in einem Schritt 228 durchgeführt.

Im Folgenden werden einzelne Verfahrensschritte der erfindungsgemäßen Blindheitserkennung und Freisichtprüfung, gemäß weiteren Ausführungsbeispielen näher beschrieben.

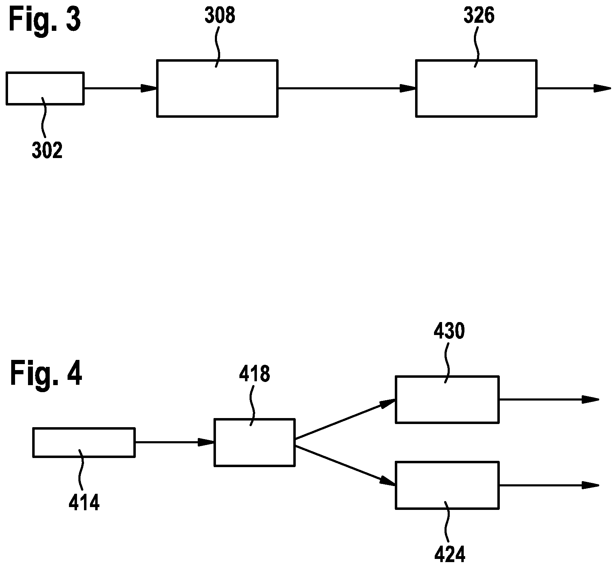

Fig. 3 zeigt ein Blockschaltbild einer Blindheitserkennung gemäß einem Ausführungsbeispiel der vorliegenden Erfindung. Gezeigt ist ein Imager oder Bildwandler 302, der ausgebildet ist, um ein Rohbild an eine Einrichtung 308 zur Blindheitserkennung bereitzustellen. Die Einrichtung 308 zur Blindheitserkennung ist ausgebildet, um basierend auf dem Rohbild eine Blindheitsmatrix zu bestimmen und an eine Einrichtung 326 zur Signalaufbereitung bereitzustellen. Die Einrichtung 326 zur Signalaufbereitung ist ausgebildet, um basierend auf der Blindheitsmatrix Signale an die Konsumenten der Blindheitserkennung bereitzustellen.

Bezogen auf das in Fig. 2 gezeigte Ausführungsbeispiel kann der Imager 302 ausgebildet sein, um das Sensorbild 202 bereitzustellen. In der Einrichtung 308 kann können beispielsweise die Verfahrensschritte 204, 206, 208, 210, 212, 224 und in der Einrichtung 326 die Verfahrensschritte 226, 228 umgesetzt werden.

Zur Blindheitserkennung kann jedes Bild, beispielsweise das von dem Imager 302 bereitgestellt wird, beispielsweise in neun gleich große Regionen aufgeteilt werden. Für jede Regionen kann beispielsweise in der Einrichtung 308 eine Blindheitswahrscheinlichkeit berechnet werden. Die Blindheitswahrscheinlichkeit kann auf den Strukturen basieren, die im Bild gefunden werden. Bei den Strukturen kann es sich um Kanten handeln. In einer weiteren Komponente, die der Einrichtung 326 entsprechen kann, können die Signale für die einzelnen Blindheitskonsumenten bestimmt werden. Blindheitskonsumenten können beispielsweise FDD, ACC, SHE oder RSR umfassen. FDD betrifft eine Fahrzeugdetektion bei Dunkelheit. Es wird für die Ansteuerung der Scheinwerfer benötigt. Wenn Blindheit vorliegt, dann werden keine Fahrzeuge entdeckt und es wird mit Dauerfernlicht gefahren, was zu Blendungen führt. ACC betrifft ein Adaptive Cruise Control. Das Fahrzeug fährt damit automatisch an und muss dazu den Raum von dem Fahrzeug überwachen, falls Blindheit vorliegt, dann wird beispielsweise ein Fußgänger nicht erkannt. SHE betrifft die Scheibenheizung. Falls Blindheit entdeckt wurde, dann wird erst einmal geheizt, um die Blindheit ggf. wegzubekommen. RSR betrifft eine Road Sign Recognition oder Straßenschildererkennung.

Fig. 4 zeigt ein Blockschaltbild einer Freisichtprüfung und Blindheitserkennung gemäß einem Ausführungsbeispiel der vorliegenden Erfindung. Gezeigt sind Algorithmen 414, die ausgebildet sind, um Ergebnisse an eine Einrichtung 418 zur Freisichtprüfung bereitzustellen. Die Einrichtung 418 zur Freisichtprüfung ist ausgebildet, um basierend auf den Ergebnissen eine Freisichtmatrix zu bestimmen und an eine Einrichtung 424 zur Blindheitserkennung und an eine Einrichtung 430 zur Signalaufbereitung bereitzustellen. Die Einrichtung 430 zur Signalaufbereitung ist ausgebildet, um basierend auf der Freisichtmatrix ein Signal "Freisicht_nio" bereitzustellen. Die Einrichtung 424 zur Blindheitserkennung ist ausgebildet, um basierend auf der Freisichtmatrix Blindheitssignale bereitzustellen. Die Freisichtmatrix kann für jede Region einen Freisichtwahrscheinlichkeitswert aufweisen.

Bezogen auf das in Fig. 2 gezeigte Ausführungsbeispiel, können die Algorithmen 414 ausgebildet sein, um die Ergebnisse 214 bereitzustellen. Die Einrichtung 418 kann ausgebildet sein, um die Verfahrensschritte 216, 218, 220, 222 umzusetzen. Die Einrichtung 424 kann ausgebildet sein, um den Verfahrensschritt 224 umzusetzen.

Zur Freisichtprüfung kann das Bild, wie bei der Blindheitserkennung in neun gleich große Regionen aufgeteilt werden. Wenn innerhalb eines Zeitintervalls, beispielsweise von einer Sekunde, mehr als eine bestimmte Anzahl an Objekte, beispielsweise Spuren, FDD- oder MOV-Objekte detektiert werden, dann wird das entsprechende Matrixelement auf 100% gesetzt. Wenn in den weiteren Zeitintervallen keine Objekte mehr detektiert werden, dann degradiert der Freisichtwert jeweils um einen bestimmten Prozentsatz, beispielsweise um 1%, pro Zeitintervall. MOV bedeutet MonoocularObjectVerfiaktion und müsste eigentlich MOD (ObjectDetection) heißen, da mit Hilfe der Kamera tagsüber Objekte, wie Autos oder Motorräder detektiert werden.

Basierend auf der Freisichtprüfung kann das Signal freisicht_nio bestimmt werden. Insbesondere kann das Signal freisicht_nio basierend auf der Freisichtmatrix bestimmt werden. Falls genügend Objekte, beispielsweise LDA-, FDD- und MOV-Objekte, im Bild erkannt wurden, wird das Signal freisicht_nio gemäß diesem Ausführungsbeispiel von 1 auf 0 gesetzt. Das Signal ist zu Beginn eines Klemme 15 Zyklus gesetzt. Sobald freie Sicht erkannt wurde, wird Signal freisicht_nio gesendet und nicht wieder neu berechnet.

Somit kann basierend auf den von den Algorithmen 414 bereitgestellten Ergebnissen sowohl eine Freisichtprüfung als auch eine Blindheitserkennung durchgeführt werden. Eine erkannte Freisicht führt zur Heilung der Blindheit. Dies gilt gemäß diesem Ausführungsbeispiel allerdings nur für die Freisichtprüfung auf der DPC, d.h. die Ergebnisse von LDA und FDD werden verwendet. Dabei wird von der Blindheitswahrscheinlichkeit der Freisichtprozentwert abgezogen. Basierend auf dieser neuen Blindheitsmatrix, der so genannten geheilten Blindheitsmatrix können die einzelnen Signale der Blindheitserkennung berechnet. DPC bedeutet Dual Purpose Camera. Es gibt auf der Kameras nur zwei Hauptfunktionen und zwar die Spur- und Fahrzeugerkennung bei Dunkelheit.

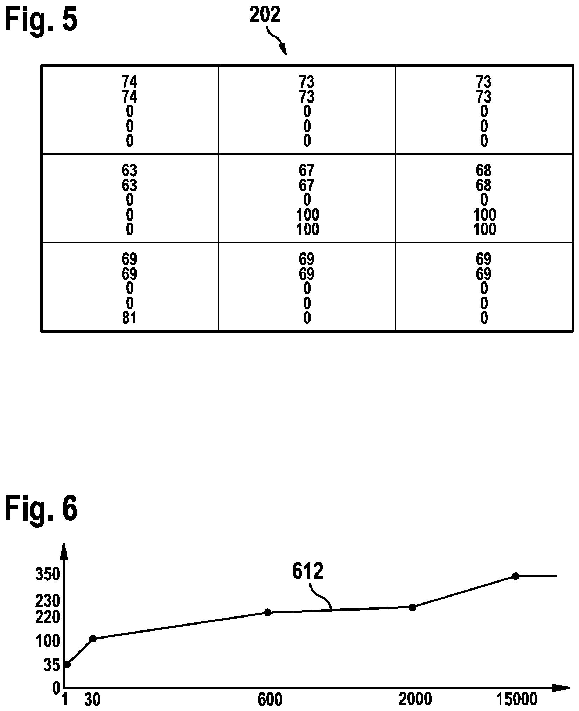

Fig. 5 zeigt ein Sensorbild 202, gemäß einem Ausführungsbeispiel der vorliegenden Erfindung. Das Bild ist in drei Spalten und drei Reihen unterteilt, so dass sich neun Regionen ergeben. Für jede Region sind die Blindheit und die Freisicht betreffende Werte angegeben, die gemäß dem erfindungsgemäßen Verfahren, für das gezeigte Bild 202 bestimmt werden können.

Für die Regionen der oberen Reihe sind, von links nach rechts die folgenden Werte bestimmt worden:

| | | | |
|---|---|---|---|
| Blindheitsindikator: | 74, | 73, | 73 |
| geheilte Blindheit: | 74, | 73, | 73 |
| Freisicht DCP: | 0, | 0, | 0 |
| Freisicht BVS: | 0, | 0, | 0 |
| kombinierte Freisicht: | 0, | 0, | 0 |

Für die Regionen der mittleren Reihe sind, von links nach rechts die folgenden Werte bestimmt worden:

| | | | |
|---|---|---|---|
| Blindheitsindikator: | 63, | 67, | 68 |
| geheilte Blindheit: | 63, | 67, | 68 |
| Freisicht DCP: | 0, | 0, | 0 |
| Freisicht BVS: | 0, | 100, | 100 |
| kombinierte Freisicht: | 0, | 100, | 100 |

Für die Regionen der unteren Reihe sind, von links nach rechts die folgenden Werte bestimmt worden:

| | | | |
|---|---|---|---|
| Blindheitsindikator: | 69, | 69, | 69 |
| geheilte Blindheit: | 69, | 69, | 69 |
| Freisicht DCP: | 0, | 0, | 0 |
| Freisicht BVS: | 0, | 0, | 0 |
| kombinierte Freisicht: | 81, | 0, | 0 |

Wenn das Signal Freisicht_nio = 0 einmal gesetzt wurde, dann wird die Freisichterkennung auf dem BVS nicht mehr durchgeführt. BVS bedeutet BildVerarbeitungsSteuergerät. Da die Kamera nur zwei Funktionen darstellen kann, werden die anderen Funktionen auf dem BVS berechnet.

Das Bild 202 zeigt eine verschneite Windschutzscheibe eines Fahrzeugs. Das Bild 202 weist in den Regionen der oberen Reihe eine höhere Helligkeit als in den Regionen der unteren Reihe auf. In dem Bild 202 sind keine klaren Strukturen und keine Objekte zu erkennen.

Mittels des erfindungsgemäßen Verfahrens können Blindheitssignale bestimmt und bereitgestellt werden. Bezogen auf Fig. 2 können die Blindheitssignale im Verfahrensschritt 226 bestimmt werden.

Gemäß diesem Ausführungsbeispiel werden für jeden Konsumenten der Blindheitserkennung die Bereiche im Bild gewählt, in denen Blindheit erkannt werden soll. Wenn die mittlere Blindheitswahrscheinlichtkeit in diesen Regionen für eine vorbestimmte Zeitdauer, beispielsweise von 45 Sekunden, höher ist, als ein Schwellwert, so wird das entsprechende Blindheitssignal gesendet.

Für den Konsumenten Scheibenheizung wird das ganze Bild wird zur Erkennung verwendet. Es werden somit alle Regionen oder Teilbilder gewählt. In Bezug auf die Blindheit ACC wird der mittlere und untere Teil des Bildes, also beispielsweise die in Fig. 5 gezeigten Teilbilder der mittleren und unteren Reihe, genutzt. In Bezug auf die Blindheit FDD wird der mittlere Bereich des Bildes genutzt. In Bezug auf die Blindheit RSR wird der mittlere und obere Bereich verwendet. In Bezug auf die Blindheit Fehlerspeichereintrag gilt eine Entprellzeit von 30min und das ganze Bild wird verwendet.

Fig. 6 zeigt eine Helligkeitskennlinie 612, gemäß einem Ausführungsbeispiel der vorliegenden Erfindung. Die Helligkeitskennlinie 612 ist in einem Diagramm aufgetragen, wobei auf der Abszisse eine Lichtintensität cbl (Camera Based Lightsensor) und auf der Ordinate ein Mittelwert eines Schwellwertes aufgetragen, der eine Sensitivität der Blindheitserkennung darstellt. Bezogen auf Fig. 2 kann die Helligkeitskennlinie 612 im Verfahrensschritt 212 eingesetzt werden. Abhängig von der Helligkeit des Bildes kann aus der Helligkeitskennlinie 612 ein Schwellwert abgelesen werden, der im Verfahrensschritt 208 eingesetzt werden kann.

Der Schwellwert weist für eine Lichtintensität von 1 cbl einen Wert von 35, für eine Lichtintensität von 30cbl einen Wert von 100, für eine Lichtintensität von 600cbl einen Wert von 220, für eine Lichtintensität von 2000cbl einen Wert von 230 und für eine Lichtintensität von 15000cbl einen Wert von 350 auf. Somit kann bei einem dunklen Bild ein kleinerer Schwellwert und bei einem hellen Bild ein größerer Schwellwert gewählt werden. Entsprechend dazu besteht bei einem dunklen Bild eine geringe Sensitivität in Bezug auf die Feststellung der Blindheit als bei einem extrem hellen Bild. Dazwischen weist die Sensitivität lediglich einen geringen Anstieg mit zunehmender Helligkeit auf.

Die Helligkeitskennlinie 612 definiert eine Sensitivität der Blindheitserkennung. Besonders bei Nacht können sehr strukturarme Szenen auftreten, die ähnlich zu Blindheitsszenen sind. Daher gibt es eine helligkeitsabhängige Sensitivität der Blindheitserkennung, wie sie durch die Kennlinie 612 gezeigt ist.

Neben oder alternativ zu der Helligkeitskennlinie 612 kann eine Kameraregelung berücksichtigt werden, um die Sensitivität der Blindheitserkennung einzustellen. Die Kameraregelung kann über eine Belichtungskennlinie berücksichtigt werden.

Somit kann die Blindheitserkennung um den Mittelwert und die Varianz des relinearisierten Histogramms erweitert werden, um die Sensitivität der Blindheitserkennung zu steuern.

Die Kennlinie der Kameraregelung kann direkt genutzt werden, um eine Aussage über die Strukturhaftigkeit im Bild zu treffen.

Wenn ein relinearisiertes Histogramm für mehrere Bereiche im Bild zur Verfügung steht, dann kann eine bessere Aussage über Blindheit getroffen werden, wenn das Bild aus sehr hellen und sehr dunklen Bereichen besteht.

Für eine Bilndheitserkennung sind Helligkeiten und Kontraste in der Welt ausschlaggebend, wohingegen eine Kameraregelung das Ziel verfolgt, immer ein optimal belichtetes Bild mit möglichst viel Kontrast zu erzeugen. Deshalb sind prinzipiell zwei Szenarien denkbar.

Gemäß dem ersten Szenario ist die Welt sehr kontrastarm, z.B. aufgrund von Nebel, aber die Kameraregelung erzeugt ein Kontrastreiches Bild, indem die extrem geringen Kontraste hervorgehoben werden.

Gemäß dem zweiten Szenario ist die Welt ist sehr kontrastreich, z.B aufgrund der tiefstehenden Sonne oder Schlagschatten. Damit die Kameraregelung den vollständigen Kontrastumfang darstellen kann, also keine Sättigung im Bild vorliegt, werden Kontraste sowohl im dunklen als auch im hellen Bereich komprimiert. Dies führt zu verschwindenden Kanten z.B. bei Baumreihen am Straßenrand, was wiederum zu einer Detektion von Blindheit führen kann.

In beiden Fällen ist es von Vorteil, dass die Blindheitserkennung die aktuell eingestellte Kennlinie der Kameraregelung mit berücksichtigt und damit nicht auf Grauwerten rechnet sondern auf Helligkeitswerten.

Die beschriebenen und in den Figuren gezeigten Ausführungsbeispiele sind nur beispielhaft gewählt. Unterschiedliche Ausführungsbeispiele können vollständig oder in Bezug auf einzelne Merkmale miteinander kombiniert werden. Auch kann ein Ausführungsbeispiel durch Merkmale eines weiteren Ausführungsbeispiels ergänzt werden. Ferner können erfindungsgemäße Verfahrensschritte wiederholt sowie in einer anderen als in der beschriebenen Reihenfolge ausgeführt werden.

## Patentansprüche

1. Computerimplementiertes Verfahren zur Analyse eines Bildes einer Bilderfassungseinrichtung für ein Fahrzeug, das die folgenden Schritte umfasst:
Empfangen (101) eines Bildes (202) über eine Bildschnittstelle, wobei das Bild von der Bilderfassungseinrichtung (302) bereitgestellte Bilddaten repräsentiert und eine von einer Belichtungskennlinie der Bilderfassungseinrichtung abhängige Helligkeit aufweist;
Unterteilen des Bildes in einzelne Regionen;
Bestimmen (103) einer Helligkeitsinformation des Bildes, die eine tatsächliche Helligkeit der von dem Bild abgebildeten Umgebung repräsentiert, basierend auf der Helligkeit des Bildes und der Belichtungskennlinie der Bilderfassungseinrichtung;
Einstellen (105) eines Schwellwertes, indem abhängig von der Helligkeitsinformation ein der Helligkeitsinformation zugeordneter Schwellwert ausgewählt wird;
Bestimmen (107) von Bildstrukturen des Bildes für jede der Regionen, wobei die Bildstrukturen mittlere Kantensteigungen von Kantenverläufen pro Region darstellen; und
Bestimmen (109; 208) eines Blindheitswertes für jede der Regionen des Bildes basierend auf den Bildstrukturen der jeweiligen Regionen unter Einsatz des Schwellwertes, indem die Bildstrukturen oder eine davon abgeleitete Größe mit dem Schwellwert verglichen werden, wobei ein Blindheitswert definiert, mit welcher Wahrscheinlichkeit eine Blindheit der Kamera in dem von der jeweiligen Region abgedeckten Bereich vorliegt.

2. Verfahren gemäß Anspruch 1, mit einem Schritt des Bestimmens eines Histogramms aus der Helligkeitsinformation, und wobei das Einstellen des Schwellwertes, abhängig von dem Histogramm durchgeführt wird.

3. Verfahren gemäß einem der vorangegangenen Ansprüche, mit einem Schritt des Ermittelns einer Helligkeitsänderung basierend auf einem zeitlichen Verlauf der Helligkeitsinformation, und wobei das Bestimmen des Blindheitswertes ferner basierend auf der Helligkeitsänderung durchgeführt wird.

4. Verfahren gemäß einem der vorangegangenen Ansprüche, bei denen die Bildstrukturen zumindest ein Objekt darstellen, das in dem Bild abgebildet wird.

5. Verfahren gemäß einem der vorangegangenen Ansprüche, mit einem Schritt des Empfangens einer Information über Objekte (214), die basierend auf von der Bilderfassungseinrichtung (302) bereitgestellten Bildern erkannt wurden, mit einem Schritt des Bestimmens (216) einer Objektanzahl für das Bild basierend auf der Information über die Objekte, wobei die Objektanzahl eine Anzahl von erkannten Objekten pro Bild umfasst, einem Schritt des Bestimmens (220, 222) eines Freisichtwertes für das Bild basierend auf der Objektanzahl unter Einsatz eines Freisichtschwellwertes.

6. Verfahren gemäß Anspruch 5, mit einem Schritt des Einstellens des Freisichtschwellwertes, abhängig von der Helligkeitsinformation.

7. Verfahren gemäß einem der Ansprüche 5 oder 6, mit einem Schritt des Bestimmens einer Blindheitswahrscheinlichkeit für das Bild, basierend auf dem Blindheitswert und dem Freisichtwert.

8. Verfahren gemäß einem der Ansprüche 5 bis 7, bei dem ein bestehender Freisichtwert für das Bild abhängig von einem Vergleich der Objektanzahl des Bildes mit dem Freisichtschwellwert um einen vorbestimmten Wert verändert wird.

9. Verfahren gemäß einem der vorangegangenen Ansprüche, wobei ein Freisichtwert für jede der Regionen bestimmt wird.

10. Verfahren gemäß einem der vorangegangenen Ansprüche, mit einem Schritt des Bestimmens (111; 226) einer ersten Blindheitsinformation basierend auf Blindheitswerten einer ersten Gruppe von Regionen und einer zweiten Blindheitsinformation basierend auf Blindheitswerten einer zweiten Gruppe von Regionen.

11. Vorrichtung, die ausgebildet ist, um die Schritte eines Verfahrens gemäß einem der Ansprüche 1 bis 10 durchzuführen.

12. Computerprogrammprodukt mit Programmcode, der bei Ausführung des Programms auf einem Steuergerät dieses zur Durchführung des Verfahrens nach einem der Ansprüche 1 bis 10 veranlasst.

## Claims

1. Computer-implemented method for analysing an image of an image capture device for a vehicle, comprising the steps of:
receiving (101) an image (202) via an image interface, wherein the image represents image data provided by the image capture device (302) and has a brightness that is dependent on an exposure characteristic curve of the image capture device;
dividing the image into individual regions;
determining (103) brightness information of the image representing an actual brightness of the environment imaged by the image, based on the brightness of the image and on the exposure characteristic curve of the image capture device;
setting (105) a threshold value by selecting, in dependence on the brightness information, a threshold value that is assigned to the brightness information;
determining (107) image structures of the image for each of the regions, wherein the image structures represent average edge gradients of edge profiles per region; and
determining (109; 208) a blindness value for each of the regions of the image based on the image structures of the respective regions using the threshold value by comparing the image structures, or a variable that is derived therefrom, to the threshold value, wherein a blindness value defines the probability that a blindness of the camera in the area covered by the respective region has occurred.

2. Method according to Claim 1, having a step of determining a histogram from the brightness information, and wherein setting the threshold value is performed in dependence on the histogram.

3. Method according to one of the preceding claims, having a step of ascertaining a brightness change based on a temporal profile of the brightness information, and wherein determining the blindness value is furthermore performed based on the brightness change.

4. Method according to one of the preceding claims, wherein the image structures represent at least one object that is imaged in the image.

5. Method according to one of the preceding claims, having a step of receiving information relating to objects (214) which were recognized based on images provided by the image capture device (302), having a step of determining (216) an object number for the image based on the information relating to the objects, wherein the object number comprises a number of objects recognized per image, a step of determining (220, 222) a clear-view value for the image based on the object number using a clear-view threshold value.

6. Method according to Claim 5, having a step of setting the clear-view threshold value in dependence on the brightness information.

7. Method according to either of Claims 5 and 6, having a step of determining a blindness probability for the image based on the blindness value and the clear-view value.

8. Method according to one of Claims 5 to 7, wherein an existing clear-view value for the image is changed by a predetermined value in dependence on a comparison of the object number of the image to the clear-view threshold value.

9. Method according to one of the preceding claims, wherein a clear-view value for each of the regions is determined.

10. Method according to one of the preceding claims, having a step of determining (111; 226) a first piece of blindness information based on blindness values of a first group of regions and a second piece of blindness information based on blindness values of a second group of regions.

11. Apparatus configured for performing the steps of a method according to one of Claims 1 to 10.

12. Computer program product having program code that, upon execution of the program on a controller, causes the latter to perform the method according to one of Claims 1 to 10.

## Revendications

1. Procédé mis en oeuvre par ordinateur pour l'analyse d'une image d'un appareil d'acquisition d'images pour un véhicule, lequel comprend les étapes suivantes :
réception (10) d'une image (202) par le biais d'une interface d'image, l'image représentant des données d'image fournies par l'appareil d'acquisition d'images (302) et possédant une luminosité dépendante d'une courbe caractéristique d'exposition lumineuse de l'appareil d'acquisition d'images ;
division de l'image en régions individuelles ;
détermination (103) d'une information de luminosité de l'image, laquelle représente une luminosité effective de l'environnement représenté par l'image, en se basant sur la luminosité de l'image et la courbe caractéristique d'exposition lumineuse de l'appareil d'acquisition d'images ;
réglage (105) d'une valeur de seuil en sélectionnant une valeur de seuil associée à l'information de luminosité en fonction de l'information de luminosité ;
détermination (107) de structures d'image de l'image pour chacune des régions, les structures d'image représentant des pentes d'arête moyennes de tracés d'arête par région ; et
détermination (109 ; 208) d'un indice d'aveuglement pour chacune des régions de l'image en se basant sur les structures d'image des régions respectives en utilisant la valeur de seuil, en comparant les structures d'image ou une grandeur qui en est dérivée à la valeur de seuil, un indice d'aveuglement étant défini, avec lequel il existe une probabilité d'un aveuglement de la caméra dans une zone couverte par la région respective.

2. Procédé selon la revendication 1, comprenant une étape de détermination d'un histogramme à partir de l'information de luminosité, et le réglage de la valeur de seuil étant effectué en fonction de l'histogramme.

3. Procédé selon l'une des revendications précédentes, comprenant une étape de détermination d'un changement de luminosité en se basant sur une progression dans le temps de l'information de luminosité, et la détermination de l'indice d'aveuglement étant en outre effectuée en se basant sur le changement de luminosité.

4. Procédé selon l'une des revendications précédentes, avec lequel les structures d'image représentant au moins un objet qui est représenté dans l'image.

5. Procédé selon l'une des revendications précédentes, comprenant une étape de réception d'une information à propos d'objets (214) qui ont été reconnus en se basant sur les images fournies par l'appareil d'acquisition d'images (302), comprenant une étape de détermination (216) d'un nombre d'objets pour l'image en se basant sur l'information à propos des objets, le nombre d'objets comportant un nombre d'objets reconnus par image, une étape de détermination (220, 222) d'un indice de visibilité pour l'image basée sur le nombre d'objets en utilisant une valeur de seuil de visibilité.

6. Procédé selon la revendication 5, comprenant une étape de réglage de la valeur de seuil de visibilité en fonction de l'information de luminosité.

7. Procédé selon l'une des revendications 5 ou 6, comprenant une étape de détermination d'une probabilité d'aveuglement pour l'image en se basant sur l'indice d'aveuglement et l'indice de visibilité.

8. Procédé selon l'une des revendications 5 à 7, avec lequel un indice de visibilité existant pour l'image est modifié d'une valeur prédéfinie en fonction d'une comparaison du nombre d'objets de l'image à la valeur de seuil de visibilité.

9. Procédé selon l'une des revendications précédentes, un indice de visibilité étant déterminé pour chacune des régions.

10. Procédé selon l'une des revendications précédentes, comprenant une étape de détermination (111 ; 226) d'une première information d'aveuglement en se basant sur les indices d'aveuglement d'un premier groupe de régions et une deuxième information d'aveuglement en se basant sur les indices d'aveuglement d'un deuxième groupe de régions.

11. Dispositif, configuré pour mettre en oeuvre un procédé selon l'une des revendications 1 à 10.

12. Produit de programme informatique, comprenant un code de programme qui, lors de l'exécution du programme sur un contrôleur, amène celui-ci à mettre en oeuvre le procédé selon l'une des revendications 1 à 10.
